# EUROPÄISCHE PATENTSCHRIFT

(11) **EP 1 901 527 B1**
(45) Veröffentlichungstag und Bekanntmachung des Hinweises auf die Patenterteilung: **29.03.2017**
(21) Anmeldenummer: 07112513.2
(22) Anmeldetag: 16.07.2007
(51) Int. Cl.: G06F 9/445, H04L 29/08

(54) **Verfahren zur Durchführung einer Kommunikation zwischen Fahrzeugen**
Method for communicating between vehicles
Procédé d'exécution d'une communication entre véhicules

(30) Priorität: 06.09.2006 DE 102006041669
(43) Veröffentlichungstag der Anmeldung: 19.03.2008
(73) Patentinhaber: ROBERT BOSCH GMBH, 70442 Stuttgart (DE)
(72) Erfinder: Boer, Gerrit De, 31139, Hildesheim (DE); May, Thomas, 38302, Wolfenbuettel (DE)

(56) Entgegenhaltungen:
- DE-A1- 10 131 839
- US-A1- 2006 155 827
- "DaimlerChrysler IT Cruiser Telematics Concept" INTERNET CITATION, [Online] Januar 2001 (2001-01), XP002271676 Gefunden im Internet: URL:http://java.sun.com/products/consumer- embedded/automotive/whitepapers /ITCruiser-Whitepaper.pdf> [gefunden am 2004-02-26]

## Beschreibung

Die Erfindung betrifft ein Verfahren zur Durchführung einer Kommunikation zwischen Fahrzeugen, eine elektronische Einheit zur Ausführung des beschriebenen Verfahrens, ein Kommunikationsnetz, ein Computerprogramm sowie ein Computerprogrammprodukt.

### Stand der Technik

Es sind Netze bekannt, insbesondere sogenannte Ad-Hoc-Netze, die über ein Funksystem aufgebaut sind und dazu verwendet werden, Informationen zwischen Fahrzeugen auszutauschen. Dabei sendet jedes Fahrzeug periodisch oder zu bestimmten Ereignissen Informationen, die von allen anderen Fahrzeugen innerhalb der Funkreichweite empfangen werden. Einige Anwendungen sehen auch vor, dass diese Informationen von allen oder von bestimmten Fahrzeugen wiederholt und damit weiteren Teilnehmern zugänglich gemacht werden.

Eine Voraussetzung eines solchen Netzes ist, dass ausreichend viele Fahrzeuge mit dieser Technik ausgestattet sind. Dies erschwert jedoch die Einführung von Fahrzeug-Zu-Fahrzeug-Kommunikationsnetzen, weil schnell eine hohe Ausstattungsrate erreicht werden muss, was zu einem erheblichen Aufwand führt. Dieses Problem betrifft insbesondere neue Applikationen und Protokolle für solche Kommunikationsnetze, auch wenn die Kommunikationstechnik bereits erfolgreich eingeführt ist. Es ist dann erforderlich, dass neue Applikationen und Protokolle zunächst für unterschiedliche Geräte in den verschiedenen Fahrzeugtypen entwickelt und in vielen Fahrzeugen installiert werden, bevor diese von Nutzen sein können.

Aus dem Artikel "Daimler Chrysler IT Cruiser Telematics Concept, Januar 2001, XP 002271676" ist eine Fahrzeugnetzwerkarchitektur bekannt, bei der Informationen über das Internet an ein Fahrzeug übertragen werden können. Zur Identifizierung ist eine Smartcard für einen Benutzer vorgesehen. Ferner ist es auch möglich, von einem Unterhaltungselektroniksystem im Haus Informationen an das Fahrzeug zu übertragen.

Hiervon ausgehend hat die Erfindung die Aufgabe eine Einführung neuer Applikationen in etablierten Fahrzeug-zu-Fahrzeug-Kommunikationsnetzen zu erleichtern.

### Offenbarung der Erfindung

Das erfindungsgemäße Verfahren dient zur Durchführung einer Kommunikation zwischen Fahrzeugen und zeichnet sich dadurch aus, dass eine Java-Schnittstelle für Grundfunktionen, typischerweise Grundfunktionen von Fahrzeug-zu-Fahrzeug-Kommunikationsnetzen, definiert wird. Somit ist besonders eine Einführung neuer Applikationen in etablierten Fahrzeug-Zu-Fahrzeug-Kommunikationsnetzen erleichtert.

Da eine Java-Schnittstelle für die Grundfunktionen von Fahrzeug-Zu-Fahrzeug-Kommunikationsnetzen definiert wird, können neue Applikationen geräteunabhängig entwickelt werden. Diese Applikationen können dann zwischen verschiedenen Fahrzeugen weitergegeben werden, so dass eine schnelle Verbreitung dieser Applikationen ermöglicht ist. In Ausgestaltung stellt Java gleichzeitig die Sicherheitsmechanismen bereit, die notwendig sind, dass das System nicht missbraucht werden kann.

Die Schnittstelle für Fahrzeug-Zu-Fahrzeug-Kommunikation (C2C-API) umfasst typischweise folgende Funktionen:
1. Abfrage, welche Teilnehmer im Netz ansprechbar sind. Der Rückgabewert ist eine Liste mit Identifikationen der ansprechbaren Teilnehmer.
2. Senden einer Nachricht an alle Teilnehmer. Die Nachricht ist eine Folge von Bytes.
3. Senden einer Nachricht an einen bestimmten Teilnehmer. Die Nachricht ist eine Folge von Bytes.
4. Abfragen der Nachrichten, die empfangen wurden. Der Rückgabewert ist eine Liste mit Nachrichten, die empfangen wurden.

Weiterhin können folgende Funktionen vorgesehen sein:
5. Abfragen der eigenen Position,
6. Übergabe von Verkehrsmeldungen an die Navigation,
7. Übergabe eines Ziels an die Navigation,
8. Ausgabe von Warnmeldungen, und
9. Darstellung einer eigenen graphischen Benutzerschnittstelle.

Es ist zu beachten, dass die Funktionen 1, 4 und 5 alternativ als Benachrichtigungen realisiert werden können. In diesem Fall können sich Applikationen für die Benachrichtigungen registrieren und werden dann automatisch informiert, wenn
- ein zusätzlicher Teilnehmer im Netz sichtbar wird,
- ein Teilnehmer das Netz verlässt,
- eine Nachricht empfangen wird, oder
- eine vorgegebene Positionsveränderung eingetreten ist.

In Ausgestaltung können die Nachrichten neben den weiterzugebenden Daten folgendes enthalten:
- eine Identifikation des Absenders,
- eine Identifikation des Adressaten,
- eine Gültigkeitsdauer,
- einen geographischer Gültigkeitsbereich der Nachricht, und/oder
- eine Priorität.

In einer Ausgestaltung der Erfindung wird eine Java-Version definiert, wie bspw. Java 2 Micro Edition, Connected Device Configuration, Personal Basis Profile (PBP) oder Java 2 Micro Edition, Connected Limited Device Configuration, Mobile Information Device Profile (MIDP), oder eine andere Version, unter der Applikationen für die Fahrzeug-Zu-Fahrzeug-Kommunikation (C2C-Applikationen) ausgeführt werden. Die Ausführungsumgebung für C2C-Applikationen enthält über die festgelegte Java-Version hinaus die C2C-API (s.o.). Außerdem wird ein Format für die C2C-Applikationen definiert, das im einfachsten Fall aus der festgelegten Java-Version übernommen wird, wie bspw. javax.microedition.xlet für PBP oder javax.microedition.midlet für MIDP.

Werden neue C2C-Applikationen im Fahrzeug installiert, können diese entweder automatisch, wenn die elektronische Einheit für die Fahrzeug-Zu-Fahrzeug-Kommunikation gestartet wird, oder explizit vom Anwender gestartet werden.

Die Weitergabe von Java-Applikationen zwischen Fahrzeugen erfolgt regelmäßig derart, dass jedes an dem Kommunikationsnetz beteiligte Fahrzeug eine Liste von verfügbaren C2C-Applikationen, die in Java implementiert sind, veröffentlicht. Wenn ein Fahrzeug A von einem Fahrzeug B eine Liste von Applikationen empfängt, in der eine neue Applikation enthalten ist, die noch nicht bei A installiert ist, kann A eine Nachricht an B schicken und dadurch veranlassen, dass B die Applikation an A sendet. A empfängt und installiert die Applikation.

Die Applikationen, die ausgetauscht werden, insbesondere die C2C-Applikationen, können eine Kennzeichnung enthalten, die angibt, ob die Applikation für eine Weitergabe an andere Fahrzeuge zur Verfügung steht oder nicht. Eine solche Kennzeichnung kann z.B. bei C2C-Applikationen, die in Java-Archivdateien (JAR-Files) enthalten sind, ein Eintrag in der Manifestdatei der JAR-Datei (JAR-Files) sein.

Außerdem können C2C-Applikationen Kennzeichnungen enthalten, die anzeigen, dass die Applikation
- nur für bestimmte Fahrzeugtypen geeignet ist,
- nur in einem definierten Zeitraum verwendet werden soll,
- nur in einem definierten geographischen Gebiet verwendet werden soll,
- eine bestimmte Speichergröße benötigt,
- eine bestimmte Prozessorleistung benötigt,
- bestimmte andere Softwarekomponenten benötigt,
- von einem bestimmten Anbieter veröffentlicht wurde,
- einer bestimmten Kategorie von Applikationen angehört, und/oder
- einem bestimmten Zweck dient.

Diese Kennzeichnungen können zusammen mit der Liste von verfügbaren C2C-Applikationen im Netz veröffentlicht werden, so dass im voranstehend erläuterten Beispiel Fahrzeug A erst entscheiden kann, ob die neue Applikation für A geeignet ist, bevor A sie von B anfordert.

Dieses Anfordern und Installieren von Applikationen kann automatisch oder erst nach Bestätigung durch den Anwender geschehen, wobei dies auch vom Anbieter der Applikation abhängig gemacht werden. Der Anbieter kann anhand einer Kennzeichnung oder einer Signatur der Applikation erkannt werden.

Neue Applikationen können in Fahrzeug-Zu-Fahrzeug-Kommunikationsnetze erstmalig eingebracht werden, indem sie in neuen Fahrzeugen vom Fahrzeughersteller installiert werden. Alternativ dazu können Applikationen neu eingeführt werden oder die Einführung neuer Applikationen beschleunigt werden, indem das beschriebene Verfahren zur Übertragung neuer Applikationen in Fahrzeuge nicht nur zwischen Fahrzeugen, sondern auch
- in Speichermedien,
- über Rundfunkmedien (DAB, DRM, DVB, Satellitenradio), und
- über Mobilfunk (GSM, UMTS) oder WLAN
ermöglicht wird.

Es sollte verhindert werden, dass Applikationen missbräuchlich in das System eingebracht werden, die z.B. falsche Warnmeldungen oder Verkehrsinformationen ausgeben. Dazu können die Sicherheitsmechanismen von Java verwendet werden. So können Applikationen signiert werden und das System kann die Installation von nicht signierten Applikationen ablehnen. Dabei ist es möglich, die Signatur eines Fahrzeugherstellers zu verwenden.

Da die Gefahr besteht, dass geheime Schlüssel verraten werden und dann zum Signieren von schädlichen Applikationen verwendet werden, wird außerdem ein Mechanismus benötigt, mit dem Signaturen nachträglich für ungültig erklärt werden können. Dazu werden Listen von ungültigen öffentlichen Schlüsseln ebenso wie C2C-Applikationen verteilt, wobei solche Listen ebenfalls signiert sein sollten.

Es ist sicherer, Listen mit ungültig gewordenen öffentlichen Schlüsseln nur über kontrollierbare Medien wie Rundfunk und Server des Fahrzeugherstellers zu verteilen. Auf diesem Weg können auch neue öffentliche Schlüssel verteilt werden.

Weiterhin wird eine elektronische Einheit zur Durchführung einer Kommunikation zwischen Fahrzeugen vorgestellt, die insbesondere zur Durchführung des beschriebenen Verfahrens ausgelegt ist. Hierzu umfasst die Einheit eine Sendeeinrichtung und eine Empfangseinrichtung, die zur Kommunikation mit anderen Fahrzeugen dienen, sowie eine Recheneinrichtung, die eine definierte Java-Schnittstelle zur Kommunikation mit den anderen Fahrzeugen implementiert.

Das erfindungsgemäße Kommunikationsnetz ist insbesondere zur Durchführung des beschriebenen Verfahrens vorgesehen.

Das erfindungsgemäße Computerprogramm mit Programmcodemitteln ist zum Durchführen aller Schritte des beschriebenen Verfahrens ausgelegt, wenn das Computerprogramm auf einem Computer oder einer entsprechenden Recheneinheit ausgeführt wird.

Das vorgestellte Computerprogrammprodukt umfasst Programmcodemittel, die auf einem computerlesbaren Datenträger gespeichert sind, um alle Schritte eines voranstehend beschriebenen Verfahrens durchzuführen, wenn das Computerprogramm auf einem Computer oder einer entsprechenden Recheneinheit ausgeführt wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt eine Ausführungsform des erfindungsgemäßen Verfahrens in einem Flussdiagramm.
- Figur 2: zeigt eine Ausführungsform der erfindungsgemäßen Einrichtungen in schematischer Darstellung.

Die Erfindung ist anhand von Ausführungsbeispielen in den Zeichnungen schematisch dargestellt und wird im Folgenden unter Bezugnahme auf die Zeichnungen ausführlich beschrieben.

### Ausführungsformen der Erfindung

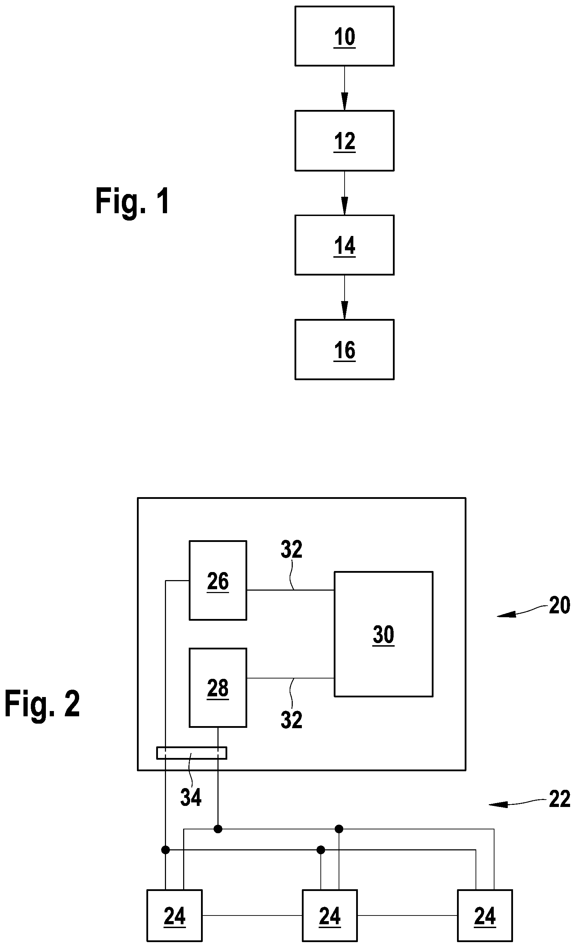

In Figur 1 ist eine mögliche Ausführung des erfindungsgemäßen Verfahrens wiedergegeben. In einem ersten Schritt 10 empfängt ein Fahrzeug als Teilnehmer in einem Kommunikationsnetz eine Liste von Applikationen, die ein weiteres Fahrzeug bzw. ein weiterer Teilnehmer in dem Kommunikationsnetz veröffentlicht hat.

In einem zweiten Schritt 12 überprüft das Fahrzeug welche der Applikationen neu sind und welche überhaupt zur Verfügung stehen. Hierzu sind den Applikationen Kennzeichnungen zue Kompatibilitätsprüfung zugeordnet.

Nach Auswahl einer oder mehrerer Applikationen werden diese von dem Fahrzeug in einem dritten Schritt 14 angefordert und nach Empfang in einem vierten Schritt 16 installiert, so dass diese von dem Fahrzeug ausgeführt bzw. genutzt werden können. Dieses Anfordern und Installieren von Applikationen kann automatisch erfolgen.

Da die angebotenen Applikationen zudem signiert sind, ist sichergestellt, dass missbräuchlich eingebrachte Applikationen als solche erkannt und verworfen werden.

In Figur 2 ist eine elektronische Einheit, insgesamt mit der Bezugsziffer 20 bezeichnet, schematisch dargestellt, die zur Durchführung des erfindungsgemäßen Verfahrens in einem Fahrzeug vorgesehen ist. Dieses Fahrzeug ist über ein Kommunikationsnetz mit 22 weiteren Fahrzeugen 24 verbunden.

Die elektronische Einheit 20 weist eine Sendeeinrichtung 26, eine Empfangseinrichtung 28 und eine Recheneinrichtung 30 auf, die über Datenleitungen 32 miteinander verbunden sind. Die Sendeeinrichtung 26 und die Empfangseinrichtung ermöglichen eine Kommunikation mit den weiteren Fahrzeugen 24 über das Kommunikationsnetzwerk 22.

Zur Durchführung der Kommunikation wird eine Java-Schnittstelle 34 für Grundfunktionen definiert, die bspw. als Software in einer Speichereinrichtung (nicht dargestellt) abgelegt ist.

## Patentansprüche

1. Verfahren zur Durchführung einer Kommunikation zwischen Fahrzeugen (24), bei dem eine Java-Schnittstelle (34) für Grundfunktionen definiert wird, bei dem Applikationen zwischen Fahrzeugen (24) weitergegeben werden und bei dem an der Kommunikation beteiligte Fahrzeuge (24) jeweils zunächst eine Liste verfügbarer Applikationen an andere Fahrzeuge (24) übertragen.

2. Verfahren nach Anspruch 1, bei dem die in der Liste als verfügbar angeführten Applikationen mit Kennzeichnungen zur Kompatibilitätsprüfung versehen sind.

3. Verfahren nach einem der vorhergehenden Ansprüche, bei dem einzelne Applikationen von einem ersten Fahrzeug (24) angefordert und von einem zweiten Fahrzeug (24) zu dem ersten Fahrzeug (24) übertragen und dort installiert und ausgeführt werden.

4. Verfahren nach einem der vorhergehenden Ansprüche, bei dem die Applikationen signiert werden.

5. Verfahren nach Anspruch 4, bei dem vor der Installation eine Signatur geprüft wird.

6. Verfahren nach einem der vorhergehenden Ansprüche, bei dem der Austausch der Applikationen automatisch erfolgt.

7. Verfahren nach einem der vorhergehenden Ansprüche, bei dem die Java-Schnittstelle (34) folgende Funktionen umfasst:
- Abfrage, welche Teilnehmer im Netz ansprechbar sind,
- Senden einer Nachricht an alle Teilnehmer,
- Senden einer Nachricht an einen bestimmten Teilnehmer,
- Abfragen der Nachrichten, die empfangen wurden.

8. Verfahren nach einem der vorhergehenden Ansprüche, bei dem die Java-Schnittstelle (34) zumindest eine der nachfolgenden Funktionen umfasst:
- Abfragen der eigenen Position,
- Übergabe von Verkehrsmeldungen an die Navigation,
- Übergabe eines Ziels an die Navigation,
- Ausgabe von Warnmeldungen,
- Darstellung einer eigenen graphischen Benutzerschnittstelle.

9. Elektronische Einheit zur Durchführung einer Kommunikation zwischen Fahrzeugen (24), zur Durchführung eines Verfahrens nach einem der Ansprüche 1 bis 8, mit einer Sendeeinrichtung (26), einer Empfangseinrichtung (28) und einer elektronischen Recheneinrichtung (30), die eine definierte Java-Schnittstelle (34) zur Kommunikation mit anderen Fahrzeugen (24) implementiert.

10. Kommunikationsnetz zur Durchführung einer Kommunikation zwischen Fahrzeugen (24), zur Durchführung eines Verfahrens nach einem der Ansprüche 1 bis 8, bei dem eine Java-Schnittstelle (34) für Grundfunktionen definiert ist.

11. Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinrichtung (30) ausgeführt wird.

12. Computerprogrammprodukt mit Programmcodemitteln, die auf einem computerlesbaren Datenträger gespeichert sind, um alle Schritte eines Verfahrens nach einem der Ansprüche 1 bis 10 durchzuführen, wenn das Computerprogramm auf einem Computer oder einer entsprechenden Recheneinrichtung (30) ausgeführt wird.

## Claims

1. Method for performing a communication between vehicles (24), in which a Java interface (34) is defined for basic functions, in which applications are forwarded between vehicles (24) and in which vehicles (24) involved in the communication each initially transmit a list of available applications to other vehicles (24).

2. Method according to Claim 1, in which the applications shown as available in the list are provided with identifiers for compatibility checking.

3. Method according to either of the preceding claims, in which individual applications are requested by a first vehicle (24) and transmitted from a second vehicle (24) to the first vehicle (24) and installed and executed on the latter.

4. Method according to one of the preceding claims, in which the applications are signed.

5. Method according to Claim 4, in which installation is preceded by a signature being checked.

6. Method according to one of the preceding claims, in which interchange of the applications is effected automatically.

7. Method according to one of the preceding claims, in which the Java interface (34) comprises the following functions:
- querying of which subscribers are addressable in the network,
- sending of a message to all subscribers,
- sending of a message to one particular subscriber,
- querying of the messages that have been received.

8. Method according to one of the preceding claims, in which the Java interface (34) comprises at least one of the following functions:
- querying of its own position,
- transfer of traffic reports to the navigation,
- transfer of a destination to the navigation,
- output of warning reports,
- representation of a graphical user interface of its own.

9. Electronic unit for performing a communication between vehicles (24), for performing a method according to one of Claims 1 to 8, having a transmission device (26), a reception device (28) and an electronic computation device (30) that implements a defined Java interface (34) for communication with other vehicles (24).

10. Communication network for performing a communication between vehicles (24), for performing a method according to one of Claims 1 to 8, in which a Java interface (34) is defined for basic functions.

11. Computer program having program code means in order to perform all the steps of a method according to one of Claims 1 to 8 when the computer program is executed on a computer or a corresponding computation device (30).

12. Computer program product having program code means that are stored on a computer-readable storage medium in order to perform all the steps of a method according to one of Claims 1 to 10 when the computer program is executed on a computer or a corresponding computation device (30).

## Revendications

1. Procédé pour réaliser une communication entre des véhicules (24), selon lequel une interface Java (34) est définie pour les fonctions de base, selon lequel les applications sont transférées entre les véhicules (24) et selon lequel les véhicules (24) qui participent à la communication transmettent respectivement tout d'abord une liste des applications disponibles aux autres véhicules (24).

2. Procédé selon la revendication 1, selon lequel les applications mentionnées disponibles dans la liste sont dotées d'identifiants en vue du contrôle de la compatibilité.

3. Procédé selon l'une des revendications précédentes, selon lequel des applications individuelles sont sollicitées par un premier véhicule (24), puis transmises par un deuxième véhicule (24) au premier véhicule (24) et y sont installées et exécutées.

4. Procédé selon l'une des revendications précédentes, selon lequel les applications sont signées.

5. Procédé selon la revendication 4, selon lequel une signature est vérifiée avant l'installation.

6. Procédé selon l'une des revendications précédentes, selon lequel l'échange des applications s'effectue automatiquement.

7. Procédé selon l'une des revendications précédentes, selon lequel l'interface Java (34) comprend les fonctions suivantes :
- Interrogation des abonnés qui peuvent être contactés dans le réseau,
- Envoi d'un message à tous les abonnés,
- Envoi d'un message à un abonné donné,
- Interrogation des messages qui ont été reçus.

8. Procédé selon l'une des revendications précédentes, selon lequel l'interface Java (34) comprend au moins l'une des fonctions suivantes :
- Interrogation de la position propre,
- Remise de messages de trafic à la navigation,
- Remise d'une destination à la navigation,
- Délivrance de messages d'avertissement,
- Représentation d'une interface utilisateur graphique propre.

9. Unité électronique destinée à réaliser une communication entre des véhicules (24), en vue de mettre en oeuvre un procédé selon l'une des revendications 1 à 8, comprenant un dispositif d'émission (26), un dispositif de réception (28) et une unité de calcul électronique (30) qui met en oeuvre une interface Java (34) définie en vue de la communication avec d'autres véhicules (24).

10. Réseau de communication destiné à réaliser une communication entre des véhicules (24), en vue de mettre en oeuvre un procédé selon l'une des revendications 1 à 8, avec lequel une interface Java (34) est définie pour les fonctions de base.

11. Programme d'ordinateur comprenant des moyens de code de programme pour exécuter toutes les étapes d'un procédé selon l'une des revendications 1 à 8 lorsque le programme d'ordinateur est exécuté sur un ordinateur ou sur un dispositif de calcul (30) correspondant.

12. Programme d'ordinateur comprenant des moyens de code de programme, lesquels sont enregistrés sur un support de données lisible par ordinateur, pour exécuter toutes les étapes d'un procédé selon l'une des revendications 1 à 10 lorsque le programme d'ordinateur est exécuté sur un ordinateur ou sur un dispositif de calcul (30) correspondant.
